# FASCICULE DE BREVET EUROPEEN

(11) **EP 4 288 652 B1**
(45) Date de publication et mention de la délivrance du brevet: **27.08.2025**
(21) Numéro de dépôt: 22705083.8
(22) Date de dépôt: 02.02.2022
(51) Int. Cl.: F02K 1/72, B64D 29/08, F02K 1/80

(54) **INVERSEUR DE POUSSEE COMPRENANT DES GRILLES ET DES CAPOTS MOBILES ASSEMBLES PAR EMBREVEMENT**
SCHUBUMKEHRVORRICHTUNG MIT BEWEGLICHEN GITTERN UND DURCH AUSSPARUNG MONTIERTEN HAUBEN
THRUST REVERSER COMPRISING MOVABLE GRIDS AND COWLS ASSEMBLED BY RECESSING

(30) Priorité: 05.02.2021 FR 2101103
(43) Date de publication de la demande: 13.12.2023
(73) Titulaire: Safran Nacelles, 76700 Gonfreville-l'Orcher (FR)
(72) Inventeur: BOILEAU, Patrick André, 77550 MOISSY-CRAMAYEL (FR); JOURDAN, Fabien, 77550 MOISSY-CRAMAYEL (FR)
(74) Mandataire: Brevalex
(86) Numéro de dépôt international: PCT/FR2022/050197
(87) Numéro de publication internationale: WO 2022/167754

(56) Documents cités:
- WO-A1-2014/091140
- FR-A1- 3 087 497
- US-A- 4 549 708
- US-A1- 2016 146 154

## Description

### Domaine technique

L'invention se rapporte au domaine des inverseurs de poussée pour ensembles propulsifs d'aéronef, comprenant des grilles mobiles.

### État de la technique antérieure

Le document WO 2014/091140 A1 décrit un inverseur de poussée à grilles mobiles de l'état de la technique antérieure correspondant au préambule de la première revendication.

L'inverseur décrit dans le document précité présente une architecture en « D », connue sous la dénomination anglophone « D-Duct », comprenant deux demi-ensembles pouvant être déplacés entre une position de fermeture, ou position de vol, et une position d'ouverture destinée à la maintenance de l'ensemble propulsif.

En position de fermeture, des capots externes des demi-ensembles coopèrent avec les grilles de manière à former un attelage mobile en translation entre une position avancée permettant de générer une poussée et une position reculée permettant de générer une contre-poussée. A cet effet, l'inverseur comprend des moyens de liaison comprenant une cannelure formée par les grilles et un couteau porté par les capots. Lorsque les demi-ensembles sont déplacés de la position d'ouverture jusqu'à la position de fermeture, le couteau vient se loger dans la cannelure. Les demi-ensembles sont ensuite maintenus en position de fermeture par des verrous.

De tels moyens de liaison et de tels verrous ne permettent pas en tant que tels d'assurer un maintien satisfaisant de la liaison entre les capots et les grilles, compte tenu notamment des charges dynamiques appliquées sur l'attelage.

### Exposé de l'invention

Un but de l'invention est de procurer un inverseur de poussée capable d'améliorer et de sécuriser la liaison des capots avec les grilles dans toutes les phases de fonctionnement de l'inverseur, en particulier lorsque l'attelage est en position avancée, en position reculée ou dans toute position intermédiaire.

A cet effet, l'invention a pour objet un inverseur de poussée pour ensemble propulsif d'aéronef, comprenant une partie fixe, deux capots et des grilles de déviation, chacun des capots étant relié à la partie fixe selon une liaison pivot de manière à pouvoir être déplacé entre une position de fermeture et une position d'ouverture destinée à la maintenance de l'ensemble propulsif, l'inverseur comprenant des moyens de liaison comprenant une ou plusieurs languettes formées par les capots ou respectivement par les grilles et au moins une rainure formée par les grilles ou respectivement par les capots, les moyens de liaison étant configurés de sorte que la ou les languettes s'emmanchent dans l'au moins une rainure lorsque les capots sont déplacés de la position d'ouverture jusqu'à la position de fermeture de sorte que, en position de fermeture, les capots et les grilles forment un attelage mobile par rapport à la partie fixe en translation le long d'un axe longitudinal entre une position avancée permettant à l'ensemble propulsif de générer une poussée et une position reculée permettant à l'ensemble propulsif de générer une contre-poussée.

Selon l'invention, l'inverseur comprend des organes de tension reliés aux grilles et étant configurés de manière à exercer une contrainte de plaquage de la ou des languettes dans l'au moins une rainure.

Le fait de relier les organes de tension aux grilles permet d'obtenir une contrainte de plaquage apte à maintenir efficacement la ou les languettes dans l'au moins une rainure dans toutes les phases de fonctionnement de l'inverseur, que l'attelage soit en position avancée, en position reculée ou dans une position intermédiaire et lors du déplacement de l'attelage entre ces différentes positions.

Il en résulte une amélioration du maintien de la liaison entre les capots et les grilles et par suite une sécurité accrue.

Les organes de tension sont de préférence configurés pour coopérer avec les capots et/ou avec une ou plusieurs pièces de transmission d'effort.

De préférence, les capots comprennent un cadre formant la ou les languettes, ou respectivement l'au moins une rainure, les organes de tension étant configurés pour coopérer avec le cadre des capots ou avec une ou plusieurs pièces de transmission d'effort portées par le cadre des capots.

Les organes de tension peuvent ainsi agir directement sur les moyens de liaison ou sur une ou plusieurs pièces de transmission agissant directement sur les moyens de liaison.

Cela permet d'améliorer encore davantage le maintien de la liaison entre les capots et les grilles.

Dans un mode de réalisation, les organes de tension comprennent au moins un verrou.

Dans un mode de réalisation, les organes de tension comprennent au moins un compas comprenant au moins deux bielles articulées l'une à l'autre, l'une des bielles étant reliée aux grilles, l'autre bielle étant reliée à l'un des capots.

Les organes de tension peuvent comprendre à la fois un tel verrou et un tel compas.

Dans un mode de réalisation dans lequel les organes de tension comprennent au moins un tel compas, le compas est configuré pour prendre une première configuration lorsque les capots sont en position de fermeture et une deuxième configuration lorsque les capots sont en position d'ouverture, l'inverseur comprenant un organe de blocage permettant de bloquer le compas dans la première configuration.

Dans ce cas, l'inverseur comprend de préférence un mécanisme de commande permettant de débloquer le compas pour pouvoir le placer dans la deuxième configuration.

Le mécanisme de commande peut comprendre un câble et une poignée configurés de sorte qu'un actionnement de la poignée exerce une traction du câble entraînant un déplacement de l'organe de blocage.

Selon un premier type de modes de réalisation, l'inverseur comprend une ou plusieurs pièces de transmission d'effort, les organes de tension coopérant avec cette ou ces pièces de transmission d'effort de manière à exercer ladite contrainte de plaquage.

De préférence, l'inverseur comprend une ou plusieurs sangles formant ladite ou lesdites pièces de transmission d'effort, chacune des sangles s'étendant radialement à l'extérieur des moyens de liaison et circonférentiellement autour de l'axe longitudinal.

De préférence, chacune des sangles comprend deux extrémités circonférentielles qui sont chacune configurées pour être reliées aux grilles par l'un respectif des organes de tension de sorte que les organes de tension puissent exercer une contrainte circonférentielle sur les sangles.

Dans un mode de réalisation dans lequel les organes de tension comprennent au moins un verrou, au moins l'une des extrémités circonférentielles d'au moins une desdites sangles est reliée audit verrou.

Dans un mode de réalisation dans lequel les organes de tension comprennent au moins un compas tel que défini ci-dessus, au moins l'une des extrémités circonférentielles d'au moins une desdites sangles est reliée audit compas de manière à préserver la liaison entre cette sangle et les grilles lorsque les capots sont déplacés entre les positions d'ouverture et de fermeture.

Afin de résister aux contraintes mécaniques et thermiques qu'elles subissent lors du fonctionnement de l'ensemble propulsif, les sangles comprennent de préférence un matériau métallique.

Dans un mode de réalisation, les sangles comprennent des sangles primaires et des sangles secondaires configurées de sorte que la contrainte de plaquage soit exercée par les sangles primaires lorsque celles-ci sont opérationnelles et par les sangles secondaires en cas de rupture ou défaillance des sangles primaires.

Selon un deuxième type de modes de réalisation, les organes de tension coopèrent directement avec les capots, de préférence avec ledit cadre des capots.

Ainsi, dans un mode de réalisation dans lequel les organes de tension comprennent au moins un compas tel que défini ci-dessus, le compas est configuré pour exercer une contrainte circonférentielle sur l'un des capots, plus préférentiellement sur ledit cadre de ce capot.

Le premier et le deuxième type de modes de réalisation décrits ci-dessus et, plus généralement, les différentes caractéristiques décrites dans le présent document peuvent être combinés entre eux.

Il est indiqué ci-dessus que les moyens de liaison comprennent « *une ou plusieurs languettes formées par les capots ou respectivement par les grilles et au moins une rainure formée par les grilles ou respectivement par les capots* » et que, de préférence, « *les capots comprennent un cadre formant la ou les languettes, ou respectivement l'au moins une rainure ».*

Ainsi, selon une première variante, l'au moins une rainure est formée par les grilles et chacun des capots, de préférence ledit cadre de ces capots, forme une ou plusieurs desdites languettes.

Selon une deuxième variante, chacun des capots, de préférence ledit cadre de ces capots, forme au moins une rainure et les grilles forment ladite ou lesdites languettes.

Une troisième variante consiste à combiner les deux variantes précitées.

Par exemple, les grilles peuvent former à la fois une ou plusieurs rainures et une ou plusieurs languettes et chacun des capots, en particulier ledit cadre de ces capots, peut former une ou plusieurs rainures et/ou une ou plusieurs languettes complémentaires.

L'invention a aussi pour objets une nacelle comprenant un tel inverseur, un ensemble propulsif comprenant une telle nacelle et un aéronef comprenant un tel ensemble propulsif.

Selon un autre aspect, l'invention a pour objet un procédé de plaquage de la ou des languettes dans l'au moins une rainure d'un inverseur tel que défini ci-dessus.

Dans un mode de réalisation, ce procédé comprend une étape d'application d'une contrainte circonférentielle par les organes de tension sur les capots ou sur une ou plusieurs pièces de transmission d'effort.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en coupe longitudinale d'un ensemble propulsif d'aéronef comprenant un turboréacteur à double flux et un inverseur de poussée dans une configuration de poussée directe ;
[Fig. 2] et
[Fig. 3] sont des vues schématiques en perspective de l'ensemble propulsif de la figure 1, en configuration de poussée directe ;
[Fig. 4] est une vue schématique en perspective de l'ensemble propulsif de la figure 1, dans une configuration de maintenance ;
[Fig. 5] est une vue schématique en perspective de l'ensemble propulsif de la figure 1, dans une configuration d'inversion de poussée ;
[Fig. 6] et
[Fig. 7] sont des demi-vues schématiques en coupe longitudinale de l'inverseur de l'ensemble propulsif de la figure 1, respectivement en configuration de poussée directe et en configuration d'inversion de poussée ;
[Fig. 8] est vue schématique en perspective d'un ensemble formant des grilles et un capot de l'inverseur de l'ensemble propulsif de la figure 1, cet ensemble comprenant un cadre arrière des grilles et un cadre avant du capot dans la configuration de maintenance de la figure 4 ;
[Fig. 9],

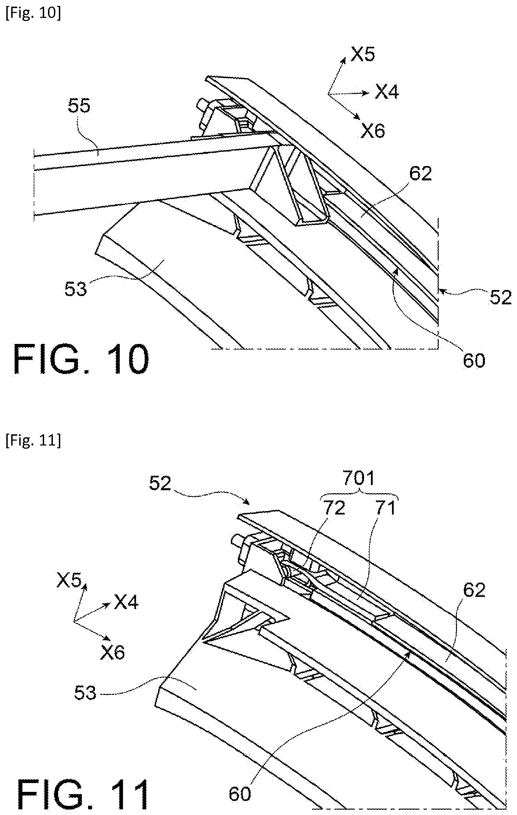

[Fig. 10] et

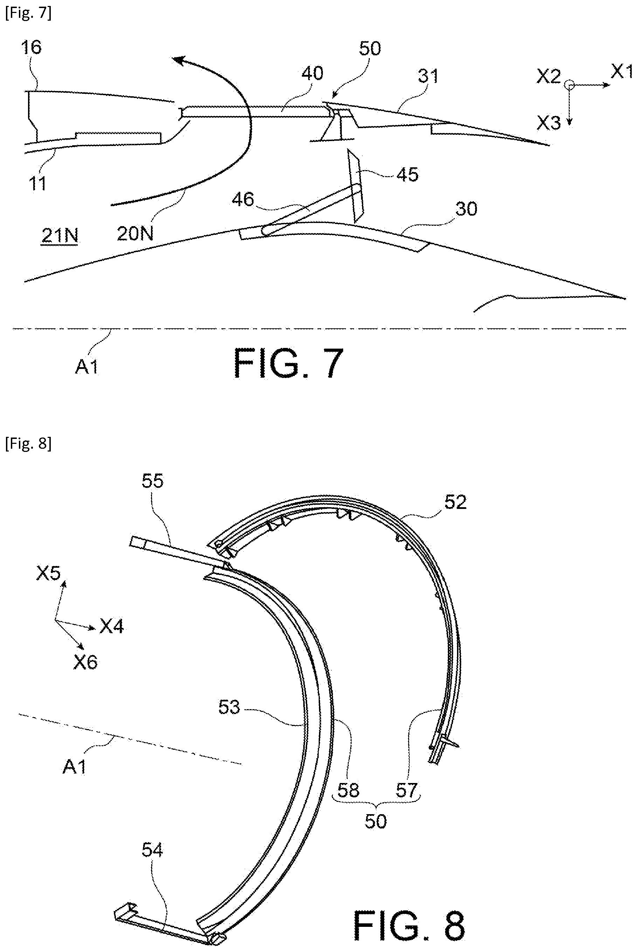

[Fig. 11] sont des vues schématiques en perspective d'une première extrémité circonférentielle de l'ensemble de la figure 8 selon un premier mode de réalisation, montrant une sangle portée par le cadre avant du capot et un premier organe de tension relié à une première extrémité de cette sangle ;

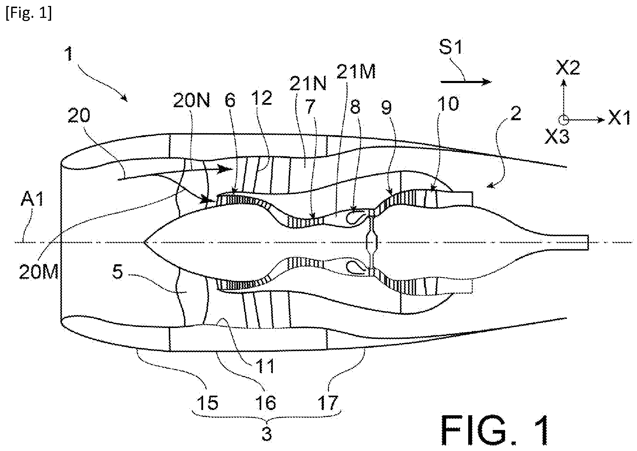

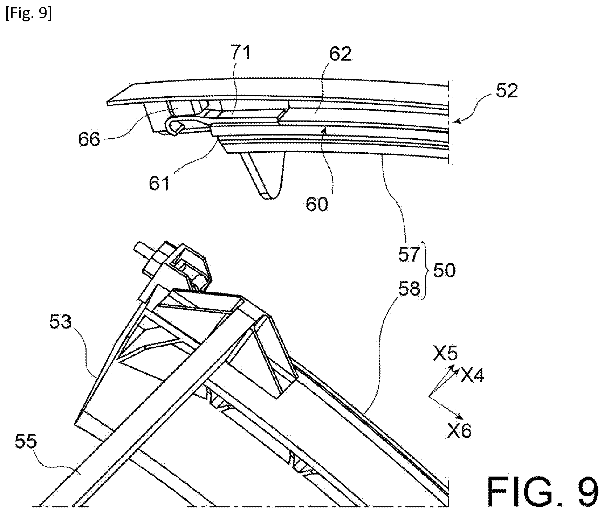

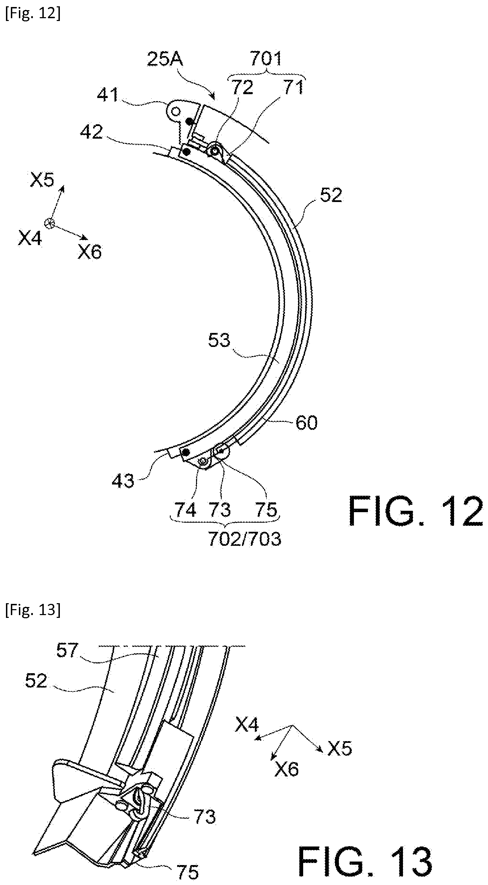

[Fig. 12] est une vue schématique d'une demi-partie de l'inverseur de l'ensemble propulsif de la figure 1, comprenant l'ensemble de la figure 8 selon le premier mode de réalisation des figures 9-11, cette figure montrant ledit premier organe de tension et un deuxième organe de tension relié à une deuxième extrémité de la sangle ;
[Fig. 13] est une vue schématique en perspective d'une deuxième extrémité circonférentielle dudit cadre avant du capot de l'ensemble de la figure 8 ;

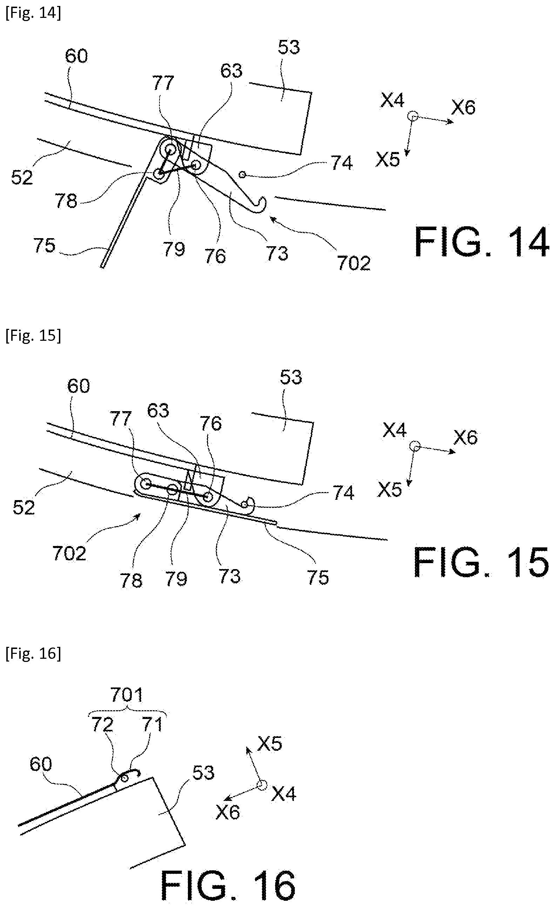

[Fig. 14] et
[Fig. 15] sont des vues schématiques de la deuxième extrémité circonférentielle de l'ensemble de la figure 8, montrant le deuxième organe de tension de la figure 12 selon une première variante respectivement dans une position de déverrouillage et dans une position de verrouillage ;
[Fig. 16] et

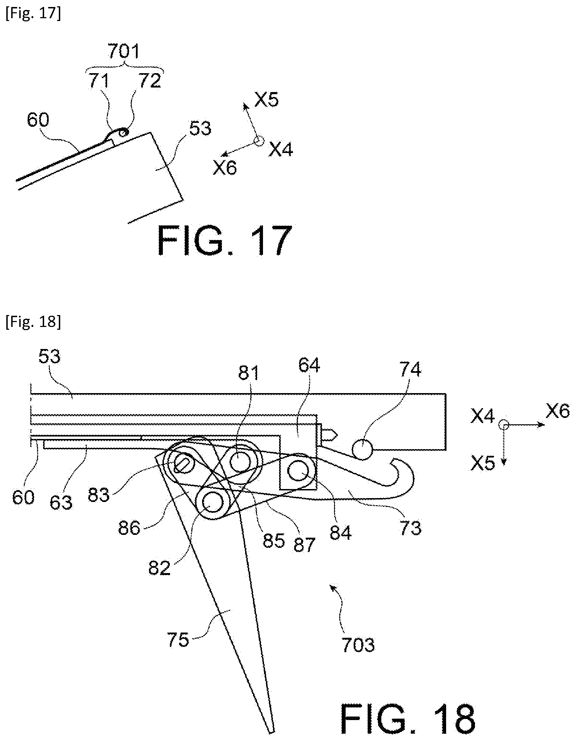

[Fig. 17] sont des vues schématiques de ladite première extrémité circonférentielle de l'ensemble de la figure 8, montrant le premier organe de tension respectivement dans une position de désengagement et dans une position d'engagement ;
[Fig. 18] et

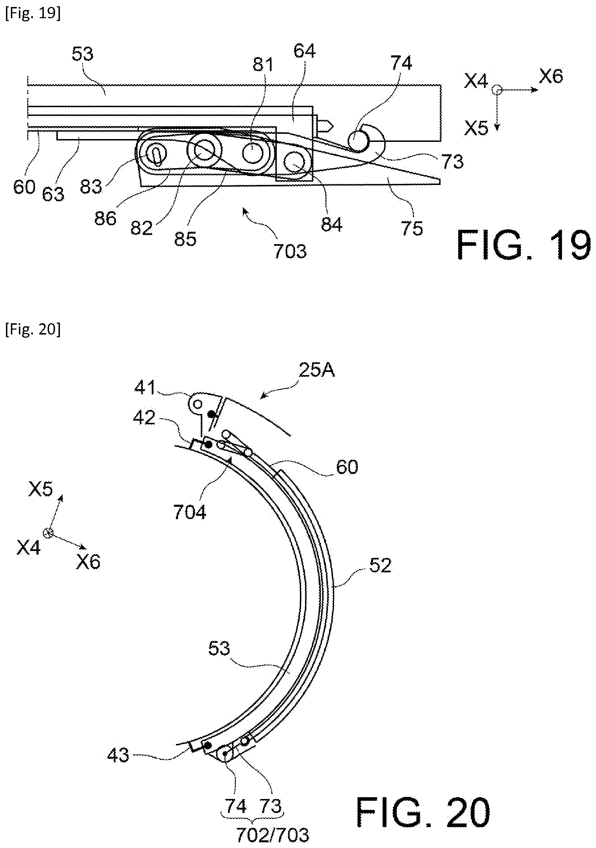

[Fig. 19] sont des vues schématiques de la deuxième extrémité circonférentielle de l'ensemble de la figure 8, montrant le deuxième organe de tension de la figure 12 selon une deuxième variante respectivement dans une position de déverrouillage et dans une position de verrouillage ;
[Fig. 20] est une vue schématique d'une demi-partie de l'inverseur de l'ensemble propulsif de la figure 1 selon un deuxième mode de réalisation, comprenant un cadre arrière de grilles, un cadre avant de capot, une sangle portée par le cadre avant, ainsi que deux organes de tension reliées aux grilles et coopérant avec la sangle, l'un des organes de tension comprenant un compas, l'autre organe de tension comprenant un verrou ;

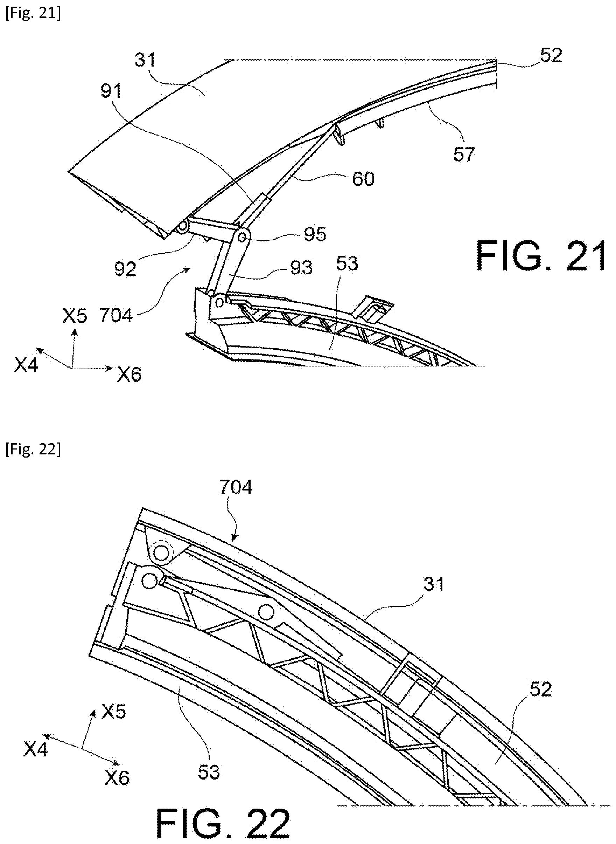

[Fig. 21] et

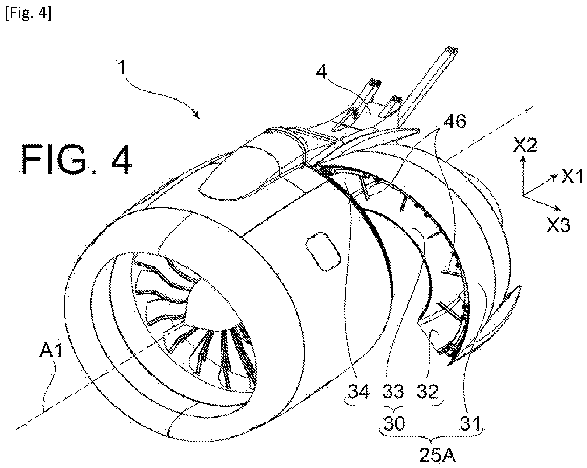

[Fig. 22] sont des vues schématiques partielles en perspective de la demi-partie d'inverseur de la figure 20, montrant le compas et le capot respectivement dans une première position correspondant à la configuration de maintenance de la figure 4 et dans une deuxième position correspondant à la configuration de vol des figures 1-3 ;

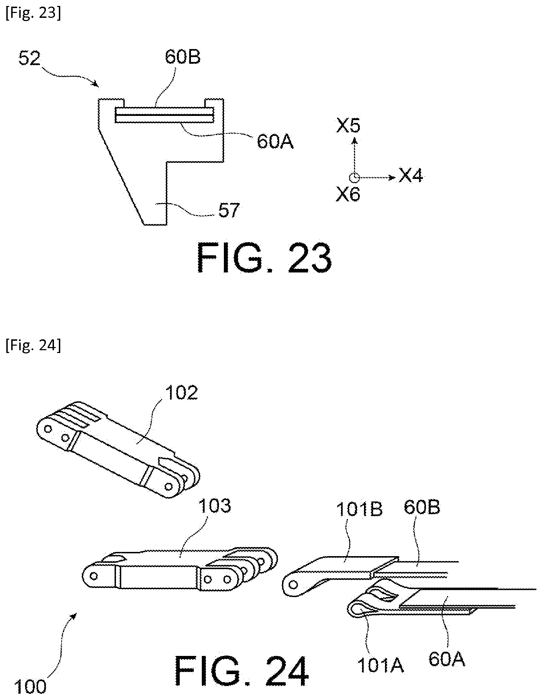

[Fig. 23] est une vue schématique d'un cadre avant de capot recevant deux sangles superposées;
[Fig. 24] est une vue schématique en perspective d'un organe de liaison des sangles de la figure 23 ;

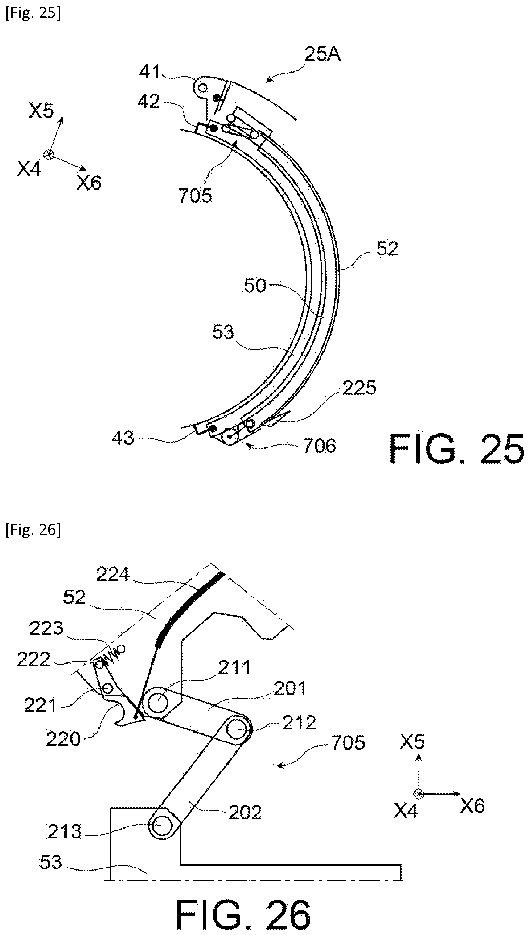

[Fig. 25] est une vue schématique d'une demi-partie de l'inverseur de l'ensemble propulsif de la figure 1 selon un troisième mode de réalisation, comprenant un cadre arrière de grilles, un cadre avant de capot ainsi que deux organes de tension reliées aux grilles et coopérant avec le cadre avant du capot, l'un des organes de tension comprenant un compas, l'autre organe de tension comprenant un verrou ;
[Fig. 26] et

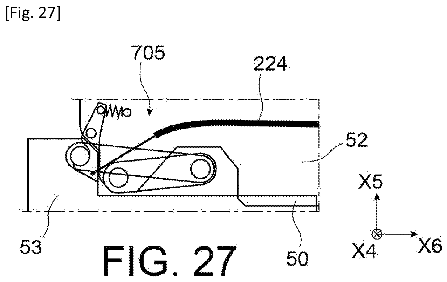

[Fig. 27] sont des vues schématiques partielles en perspective de la demi-partie d'inverseur de la figure 25, montrant le compas et le capot respectivement dans une première position correspondant à la configuration de maintenance de la figure 4 et dans une deuxième position correspondant à la configuration de vol des figures 1-3, ces figures montrant un mécanisme permettant de bloquer le compas lorsque le capot dans la deuxième position.

### Description détaillée de modes de réalisation

Les figures 1 à 7 comprennent un référentiel X1-X2-X3 définissant respectivement des directions longitudinale, verticale et latérale orthogonales entre elles. Les figures 8-23 et 25-27 comprennent un référentiel X4-X5-X6 définissant respectivement des directions longitudinale, radiale et circonférentielle orthogonales entre elles.

Les figures 1 à 5 montrent un ensemble propulsif 1 présentant un axe central longitudinal A1.

Par la suite, les termes « avant » et « arrière » sont définis relativement à un sens S1 d'écoulement des gaz à travers l'ensemble propulsif 1 le long de l'axe A1 lorsque celui-ci génère une poussée.

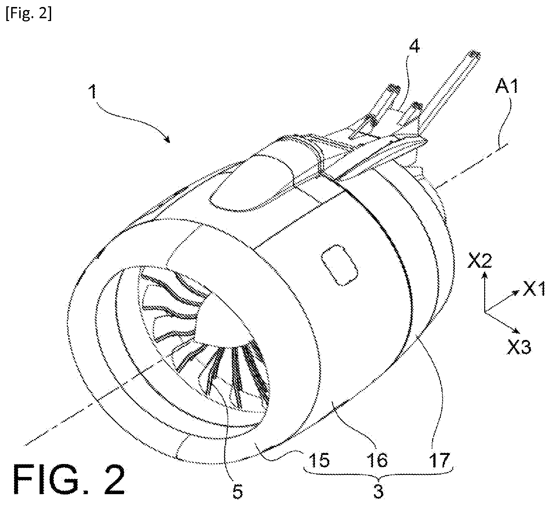

L'ensemble propulsif 1 comprend une turbomachine 2 (visible sur la figure 1), une nacelle 3 et un mât 4 (visible sur les figures 2 à 5) permettant de relier l'ensemble propulsif 1 à une voilure d'un aéronef (non représenté).

Dans l'exemple de la figure 1, la turbomachine 2 est un turboréacteur à double flux comprenant, de l'avant vers l'arrière, une soufflante 5, un compresseur basse pression 6, un compresseur haute pression 7, une chambre de combustion 8, une turbine haute pression 9 et une turbine basse pression 10. Les compresseurs 6 et 7, la chambre de combustion 8 et les turbines 9 et 10 forment un générateur de gaz.

Le turboréacteur 2 comprend un carter de soufflante 11 relié au générateur de gaz par des bras structuraux 12.

La nacelle 3 comprend une section avant 15 formant une entrée d'air, une section médiane 16 qui comporte des capots de soufflante enveloppant le carter de soufflante 11 et une section arrière 17.

De manière connue en soi, lors du fonctionnement du turboréacteur 2, un écoulement d'air 20 pénètre dans l'ensemble propulsif 1 par l'entrée d'air 15, traverse la soufflante 5 puis se divise en un flux primaire 20M central et un flux secondaire 20N. Le flux primaire 20M s'écoule dans un conduit primaire 21M de circulation des gaz au sein du générateur de gaz. Le flux secondaire 20N s'écoule quant à lui dans un conduit secondaire 21N entourant le générateur de gaz et délimité radialement vers l'extérieur par la nacelle 3.

La nacelle 3 comprend un inverseur de poussée formé par la section arrière 17.

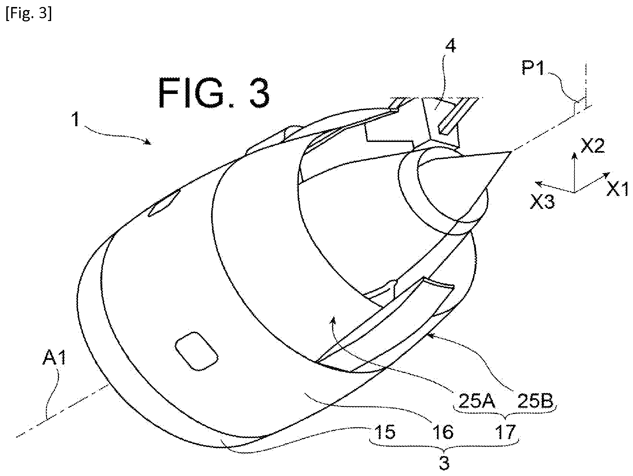

En référence à la figure 3, la section arrière 17 comprend deux demi-ensembles 25A et 25B de forme hémicylindrique et symétriques l'un par rapport à l'autre relativement à un plan vertical P1 passant par l'axe A1 et parallèle à la direction verticale X2. Ainsi, les demi-ensembles 25A et 25B s'étendent latéralement de part et d'autre du plan vertical P1 et en particulier de part et d'autre du mât 4.

En référence à la figure 4 qui montre le demi-ensemble 25A dans une position d'ouverture, le demi-ensemble 25A comprend un carénage interne 30 et un capot externe 31.

Le carénage interne 30, couramment dénommé « structure interne fixe », comporte une paroi de jonction inférieure 32 aussi appelée « îlot » ou « bifurcation » « six-heures », une paroi centrale 33 de forme semi-annulaire et une paroi de jonction supérieure 34 aussi appelée « îlot » ou « bifurcation » « douze-heures ».

Le capot 31 s'étend radialement à l'extérieur de la paroi centrale 33 du carénage interne 30 et présente lui aussi une forme semi-annulaire.

La paroi centrale 33 du carénage interne 30 et le capot 31 définissent radialement entre eux un secteur circonférentiel du conduit secondaire 21N, ce secteur s'étendant circonférentiellement entre la paroi de jonction inférieure 32 et la paroi de jonction supérieure 34 du carénage interne 30.

Le demi-ensemble 25A est relié, par l'une de ses extrémités circonférentielles, à une partie fixe de l'ensemble propulsif 1, en l'occurrence à une poutre 41 (visible sur les figures 12, 20 et 25) solidaire du mât 4, selon une liaison pivot de manière à pouvoir être déplacé entre une position de fermeture illustrée à la figure 3 et la position d'ouverture de la figure 4.

Dans cet exemple, le déplacement du demi-ensemble 25A entre les positions de fermeture et d'ouverture correspond à un déplacement simultané du capot 31 et du carénage interne 30 qui sont solidaires l'un de l'autre en rotation autour de l'axe formé par ladite liaison pivot. Autrement dit, l'inverseur présente dans cet exemple une architecture en « D ».

La position d'ouverture permet à un opérateur de maintenance d'accéder au turboréacteur 2.

La description qui précède s'applique par analogie au demi-ensemble 25B.

Pour maintenir les demi-ensembles 25A et 25B en position de fermeture (figure 3), ceux-ci sont reliés l'un à l'autre à l'aide de verrous (non représentés) montés à six heures, verticalement à l'opposé du mât 4.

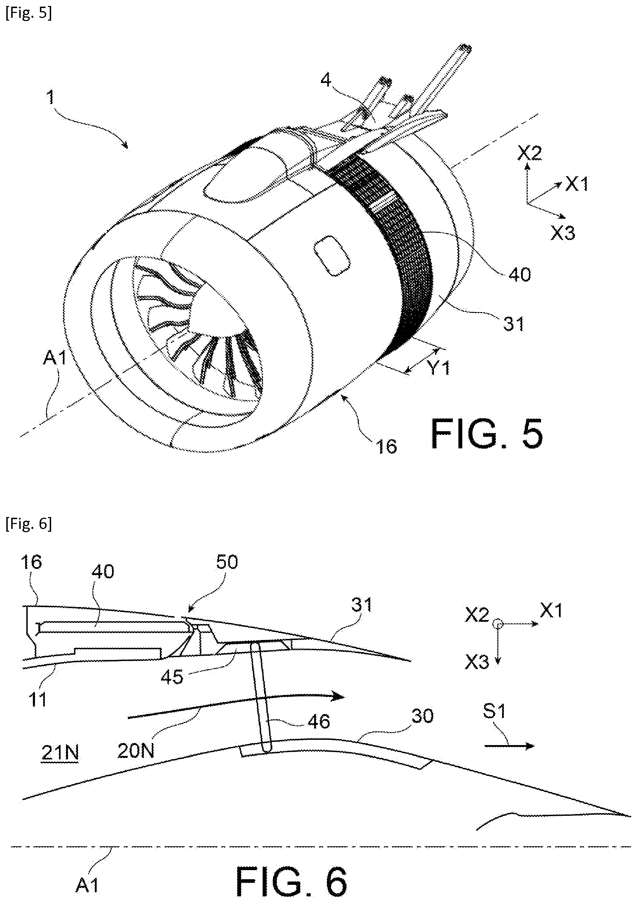

En référence aux figures 5 à 7, l'inverseur comprend des grilles 40 et des moyens de liaison 50 configurés pour relier le capot 31 de chacun des demi-ensembles 25A et 25B aux grilles 40 lorsque les demi-ensembles 25A et 25B sont en position de fermeture.

Les capots 31 et les grilles 40 ainsi reliés forment un attelage mobile en translation le long de l'axe A1 entre une position avancée illustrée aux figures 2, 3 et 6 et une position reculée illustrée aux figures 5 et 7.

Dans cet exemple, cet attelage est mobile par rapport à ladite partie fixe de l'ensemble propulsif 1 et par rapport à la structure interne fixe 30 de chacun des demi-ensembles 25A et 25B.

En position avancée (figures 2, 3 et 6), les grilles 40 sont logées dans un espace circonférentiel formé par la section médiane 16 et une extrémité avant des capots 31 vient en appui sur une extrémité arrière de la section médiane 16.

En position avancée, le conduit secondaire 21N canalise le flux secondaire 20N vers l'arrière de l'ensemble propulsif 1 de manière à générer une poussée (voir figure 6).

En position reculée (figures 5 et 7), l'extrémité avant des capots 31 et l'extrémité arrière de la section médiane 16 sont éloignées l'une de l'autre d'une distance Y1 définissant une ouverture radiale. Les grilles 40 s'étendent longitudinalement entre l'extrémité arrière de la section médiane 16 et l'extrémité avant des capots 31 et circonférentiellement autour de l'axe A1 de manière à s'étendre à travers ladite ouverture radiale.

De manière connue en soi, chacun des demi-ensembles 25A et 25B comprend des volets d'obturation 45 articulés sur le capot 31 et des bielles 46 qui sont chacune reliées d'une part à l'un respectif des volets 45 et d'autre part à la paroi centrale 33 de la structure interne fixe 30 de sorte que, lorsque le capot 31 passe de la position avancée à la position reculée, les volets 45 se déploient radialement dans le conduit secondaire 21N de manière à obturer ce conduit 21N (voir figure 7).

Le flux secondaire 20N est ainsi dirigé vers les grilles 40 qui dévient ce flux vers l'avant de l'ensemble propulsif 1 afin de générer une contre-poussée.

Pour permette le déplacement de l'attelage entre les positions avancée et reculée, les grilles 40 et les capots 31 sont reliés à des poutres 41, 42 et 43 (voir figures 12, 20 et 25) selon une liaison glissière et les capots 31 sont entraînés en translation par des actionneurs (non représentés) tels que des vérins logés dans l'espace circonférentiel formé par la section médiane 16. Les moyens de liaison 50 permettent d'entraîner les grilles 40 sous l'action du déplacement des capots 31.

Dans cet exemple, les grilles 40 comprennent deux demi-parties de forme hémicylindrique et symétriques l'une par rapport à l'autre relativement au plan vertical P1, chacune de ces demi-parties ayant une dimension circonférentielle sensiblement identique à la dimension circonférentielle des capots 31.

Ainsi, chacune des demi-parties des grilles 40 coopère avec l'un respectif des capots 31 lorsque ceux-ci sont en position de fermeture.

La description qui suit se rapporte au demi-ensemble 25A ainsi qu'à la demi-partie correspondante des grilles 40 et s'applique par analogie au demi-ensemble 25B et à l'autre demi-partie des grilles 40.

La figure 8 montre d'une part un cadre avant 52 du capot 31 en position d'ouverture et d'autre part un cadre arrière 53 des grilles 40 prévue pour coopérer avec le capot 31 lorsque celui-ci est placé en position de fermeture.

La figure 8 montre aussi deux longerons 54 et 55 permettant notamment de relier le cadre arrière 53 à un cadre avant (non représenté) des grilles 40.

Dans le mode de réalisation de la figure 8, le cadre avant 52 du capot 31 forme un tronçon d'anneau présentant deux extrémités circonférentielles et comprend une languette 57 qui s'étend circonférentiellement entre ces deux extrémités et radialement vers l'intérieur en direction du cadre arrière 53 des grilles 40.

Lorsque le capot 31 est en position de fermeture, la languette 57 s'étend circonférentiellement autour de l'axe A1.

Dans cet exemple, la languette 57 s'étend sensiblement sur toute la dimension circonférentielle du cadre avant 52.

Le cadre arrière 53 des grilles 40 forme lui aussi un tronçon d'anneau présentant deux extrémités circonférentielles et comprend une rainure 58 s'étendant circonférentiellement entre ces deux extrémités.

La languette 57 et la rainure 58 présentent une complémentarité de forme de sorte que, lorsque le capot 31 est déplacé de la position d'ouverture (figures 8 et 9) jusqu'à la position de fermeture (figures 10 et 11), la languette 57 s'emmanche dans la rainure 58.

Les moyens de liaison 50 permettent ainsi de solidariser le capot 31 avec les grilles 40 par encastrement de manière à former ledit attelage.

L'invention se rapporte plus spécifiquement à des moyens de chargement permettant d'appliquer une contrainte de plaquage de la languette 57 dans la rainure 58 afin d'améliorer et de sécuriser la liaison réalisée par ces moyens de liaison 50.

Dans le mode de réalisation des figures 8 à 24, les moyens de chargement comprennent une sangle 60 et deux organes de tension 701/704 et 702/703 de cette sangle 60.

En référence à la figure 9, le cadre avant 52 du capot 31 comprend un élément 61 formant radialement vers l'intérieur la languette 57 et définissant radialement vers l'extérieur une surface de glissement.

Dans cet exemple, le cadre avant 52 du capot 31 comprend aussi une pièce de retenue 62 telle qu'une équerre s'étendant radialement à l'extérieur de l'élément 61 de manière à définir un espace radial entre la surface de glissement et une surface radialement interne de cette pièce de retenue 62 (voir figures 9 et 10).

La sangle 60 est logée au sein de cet espace radial dont la dimension radiale est supérieure à l'épaisseur de la sangle 60.

La sangle 60 s'étend ainsi radialement à l'extérieur de la languette 57 et longitudinalement au même niveau que celle-ci.

Lorsque le capot 31 est en position de fermeture, la sangle 60 s'étend circonférentiellement autour de l'axe A1 de manière à former deux extrémités circonférentielles.

Chaque extrémité circonférentielle de la sangle 60 est reliée à l'un respectif des organes de tension 701/704 et 702/703.

En référence à la figure 12, l'extrémité circonférentielle de la sangle 60 située verticalement en haut, à proximité de la poutre 41, est appelée « première extrémité » et celle située verticalement en bas est appelée « deuxième extrémité ». De même, l'extrémité circonférentielle du cadre avant 52 du capot 31 située verticalement en haut, à proximité de la poutre 41, est appelée « première extrémité » et celle située verticalement en bas est appelée « deuxième extrémité ». Dans ce qui suit, l'organe de tension relié à la première, respectivement à la deuxième, extrémité de la sangle 60 est appelé « premier organe de tension », respectivement « deuxième organe de tension ».

Dans le mode de réalisation des figures 8 à 17, le premier organe de tension 701 comprend un premier élément d'attache 71 formant un crochet et un deuxième élément d'attache 72 formant un cylindre. Le premier élément d'attache 71 est fixé à la première extrémité de la sangle 60 tandis que le deuxième élément d'attache 72 est solidaire du cadre arrière 53 des grilles 40.

Dans le mode de réalisation des figures 8 à 17, le deuxième organe de tension 702 est un verrou comprenant une première partie solidaire de la deuxième extrémité de la sangle 60 et une deuxième partie solidaire du cadre arrière 53 des grilles 40.

De manière générale, la première partie du verrou 702 comprend un premier élément d'attache 73 formant un crochet destiné à coopérer avec un deuxième élément d'attache 74 tel qu'un cylindre formant la deuxième partie de ce verrou.

Le verrou 702 comprend un actionneur 75 sous forme de poignée de verrouillage/déverrouillage.

En référence aux figures 14 et 15, la première partie du verrou 702 est reliée à un organe d'articulation 63 fixée à la deuxième extrémité de la sangle 60. La première partie du verrou 702 comprend une première articulation 76 définissant un axe de rotation à la fois du crochet 73 par rapport à l'organe d'articulation 63 et d'une première extrémité d'une biellette 79 par rapport à l'organe d'articulation 63. La première partie du verrou 702 comprend aussi une deuxième articulation 77 définissant un axe de rotation du crochet 73 par rapport à la poignée 75 et une troisième articulation 78 définissant un axe de rotation de la poignée 75 par rapport à une deuxième extrémité de la biellette 79.

Le premier organe de tension 701, le verrou 702 et la sangle 60 constituent des moyens de chargement permettent de générer la contrainte de plaquage par actionnement manuel de la poignée 75 du verrou 702.

Pour ce faire, après que le capot 31 ait été placé en position de fermeture, la poignée 75 est actionnée de manière à faire passer le verrou 702 de l'état de déverrouillage illustré à la figure 14 à l'état de verrouillage illustré à la figure 15.

Pour permettre un bon positionnement de la sangle 60 lors de cette course de verrouillage en dépit du montage flottant de la première partie du verrou 702, l'organe d'articulation 63 ou un autre élément de la première partie du verrou 702 est dans cet exemple configuré pour prendre appui sur une butée formée par le cadre avant 52 du capot 31. A titre d'exemple, cette butée peut être formée par une extrémité d'une ouverture oblongue autorisant un coulissement de l'organe d'articulation 63 par rapport au cadre avant 52.

Lors de cette course de verrouillage, le verrou 702 exerce un effort de traction sur la deuxième extrémité de la sangle 60 de sorte que le crochet 71 du premier organe de tension 701 vienne en appui sur le cylindre 72, en faisant passer le premier organe de tension 701 de l'état de désengagement illustré à la figure 16 à l'état d'engagement illustré à la figure 17.

Afin de garantir l'engagement du cylindre 72 dans le crochet 71, le cadre avant 52 du capot 31 comprend dans l'exemple de la figure 9 une butée radiale 66.

Dans un mode de réalisation non représenté, un organe de précontrainte est interposé radialement entre le crochet 71 et la butée radiale 66, par exemple un ressort fixé au crochet 71.

La sangle 60 et les organes de tension 701 et 702 sont configurés de sorte que le premier organe de tension 701 atteigne l'état d'engagement (figure 17) lors d'une première partie de la course de verrouillage, c'est-à-dire avant que le verrou 702 n'atteigne l'état de verrouillage (figure 15).

Lors d'une seconde partie de la course de verrouillage, les deux organes de tension 701 et 702 exercent sur la sangle 60 une contrainte circonférentielle croissante qui plaque la sangle 60 sur la surface de glissement formée par le cadre avant 52 du capot 31. Cette surface autorise un glissement circonférentiel relatif de la sangle 60 par rapport au cadre 52.

Le plaquage de la sangle 60 tractée permet de générer la contrainte de plaquage de la languette 57 dans la rainure 58.

La sangle 60 forme ainsi une pièce transmission d'effort permettant de produire une action mécanique au droit des moyens de liaison 50, c'est-à-dire dans un plan transversal traversant les moyens de liaison 50.

Les figures 18 et 19 montrent un autre type de verrou 703 pouvant former le deuxième organe de tension de l'ensemble de la figure 12.

A la différence du verrou 702, la première partie du verrou 703 n'est pas montée flottante mais est reliée à une partie 64 du cadre avant 52.

Dans l'exemple des figures 18 et 19, le verrou 703 comprend quatre articulations 81, 82, 83 et 84 et trois biellettes 85, 86 et 87. L'articulation 81 définit un axe de rotation d'une première extrémité de la biellette 85 par rapport à l'organe d'articulation 63 fixé à la sangle 60. L'articulation 82 définit un axe de rotation d'une deuxième extrémité de la biellette 85 par rapport à une première extrémité de chacune des biellettes 86 et 87. L'articulation 83 définit un axe de rotation commun pour une deuxième extrémité de la biellette 86, le crochet 73 et la poignée 75. L'articulation 84 définit quant à elle un axe de rotation d'une deuxième extrémité de la biellette 87 par rapport à la partie 64 du cadre avant 52.

Dans les différents modes de réalisation décrits ci-dessus, les organes de tension 701, 702 et 703 forment des moyens de jonction détachable, aptes à relier la sangle 60 au cadre arrière 53 des grilles 40 lorsque le capot 31 est en position de fermeture et à la désolidariser, au moins partiellement, de ce cadre arrière 53 lorsque le capot 31 est déplacé vers la position d'ouverture.

Le mode de réalisation des figures 20 à 22 se distingue des modes de réalisation décrits ci-dessus en ce que le premier organe de tension 704 forme un moyen de jonction permanente de la sangle 60 au cadre arrière 53 des grilles 40.

En référence à la figure 21, le premier organe de tension 704 comprend une pièce de liaison 91 fixée à la première extrémité de la sangle 60 et reliée à deux bielles 92 et 93 articulées l'une à l'autre de manière à former un compas.

Plus précisément, le premier organe de tension 704 comprend un élément d'articulation 95 tel qu'un arbre auquel sont reliés selon une liaison pivot la pièce de liaison 91 et une première extrémité de chacune des bielles 92 et 93.

La deuxième extrémité de la bielle 92 est articulée sur le cadre avant 52 du capot 31 tandis que la deuxième extrémité de la bielle 93 est articulée sur le cadre arrière 53 des grilles 40.

Un tel organe de tension 704 permet de préserver la liaison entre la sangle 60, les grilles 40 et le capot 31 lorsque celui-ci est déplacé entre la position d'ouverture (figure 21) et la position de fermeture (figure 22). Cela permet notamment d'éviter tout problème d'engagement et de désengagement de moyens de jonction détachable tels que l'organe 701 des figures 16 et 17.

En position de fermeture, la bielle 93 s'étend dans la continuité de la pièce de liaison 91 et de la sangle 60, assurant une bonne répartition des efforts de traction.

L'organe de tension 704 des figures 20 à 22 permet par ailleurs de limiter l'amplitude de glissement circonférentiel de la sangle 60 lors du déplacement du capot 31 entres les positions d'ouverture et de fermeture.

Dans cet exemple, les bielles 92 et 93 ont une raideur leur permettant de contribuer au positionnement du capot 31 et du demi-ensemble 25A lors de son ouverture et d'assurer son guidage lors de sa fermeture afin d'améliorer l'alignement de la languette 57 par rapport à la rainure 58.

Dans les exemples qui précèdent, le capot 31 est équipé d'une sangle 60 unique.

Une deuxième sangle de secours peut être mise en œuvre, notamment pour pallier les difficultés d'accès en maintenance courante.

Ainsi, dans l'exemple de la figure 23, le cadre avant 52 du capot 31 porte deux sangles 60A et 60B superposées l'une à l'autre.

La sangle 60A forme une sangle primaire mise en œuvre de la manière décrite ci-dessus, tandis que la sangle 60B forme une sangle secondaire de secours configurée pour exercer la contrainte de plaquage en cas de rupture ou défaillance de la sangle primaire 60A.

Pour ce faire, les sangles 60A et 60B peuvent être reliées par l'une de leurs extrémités circonférentielles à un organe de tension configuré pour exercer une contrainte circonférentielle différentielle.

La figure 24 montre un organe de tension 100 capable d'assurer une telle fonction et pouvant être monté en lieu et place de l'organe de tension 704 des figures 20 à 22.

Dans cet exemple, la première extrémité de la sangle 60A est fixée à un élément d'articulation 101A et la première extrémité de la sangle 60B est fixée à un élément d'articulation 101B.

Des bielles 102 et 103, ayant une fonction analogue aux bielles 92 et 93 de la figure 21, sont articulées l'une à l'autre par un premier arbre (non représenté) solidaire d'une première extrémité de la bielle 103.

Les éléments d'articulation 101A et 101B sont articulés autour d'un deuxième arbre (non représenté) qui est solidaire de la première extrémité d'une bielle 103 et adjacent au premier arbre.

La deuxième extrémité de la bielle 102 est articulée sur le cadre avant 52 du capot 31 tandis que la deuxième extrémité de la bielle 103 est articulée sur le cadre arrière 53 des grilles 40.

Les figures 25 à 27 illustrent des moyens de chargement qui se distinguent de ceux décrits ci-dessus en référence aux figures 8 à 24 en ce que des organes de tension agissent directement sur le cadre avant 52 du capot 31, sans mise en œuvre d'une pièce de transmission d'effort telle qu'une sangle.

En référence à la figure 26, les moyens de chargement comprennent un premier organe de tension 705 formé dans cet exemple par deux bielles 201 et 202 et trois éléments d'articulation 211, 212 et 213.

Une première extrémité de la bielle 201 est articulée au cadre avant 52 du capot 31 par l'élément d'articulation 211 et une première extrémité de la bielle 202 est articulée au cadre arrière 53 des grilles 40 par l'élément d'articulation 213. Les bielles 201 et 202 sont articulées entre elles par leur deuxième extrémité via l'élément d'articulation 212.

Les bielles 201 et 202 forment ainsi un compas pouvant passer d'une configuration ouverte illustrée à la figure 26 lorsque le capot 31 est en position d'ouverture à une configuration fermée illustrée à la figure 27 lorsque le capot 31 est position de fermeture, et réciproquement.

Pour bloquer le compas en configuration fermée, l'inverseur comprend un mécanisme de blocage comprenant un organe de blocage 220, deux éléments d'articulation 221 et 22 et un organe élastique tel qu'un ressort 223.

L'organe de blocage 220 est articulé au cadre avant 52 du capot 31 par l'élément d'articulation 221 et comprend une extrémité formant un crochet configuré pour coopérer avec l'élément d'articulation 213 solidaire du cadre arrière 53 des grilles 40.

Le ressort 223 est relié à l'organe de blocage 220 par l'élément d'articulation 222 de manière à exercer sur l'organe de blocage 220 un effort de blocage tendant à le faire pivoter dans un premier sens de rotation autour de l'élément d'articulation 221.

L'organe de blocage 220 est configuré de sorte que, lorsque le capot 31 est déplacé de la position d'ouverture (figure 26) jusqu'à la position de fermeture (figure 27), l'organe de blocage 220 prend appui sur l'élément d'articulation 213 de manière à pivoter dans un deuxième sens de rotation autour de l'élément d'articulation 221 et permettre ainsi l'engagement du crochet autour de l'élément d'articulation 213. L'effort de blocage exercé par le ressort 223 permet de bloquer le compas en configuration fermée.

Afin de pouvoir désengager l'organe de blocage 220 par rapport à l'élément d'articulation 213 et ouvrir ensuite le capot 31, l'inverseur est équipé d'un mécanisme de commande comprenant dans cet exemple un câble 224 et une poignée d'actionnement 225.

Une première extrémité du câble 224 est reliée à l'organe de blocage 220 de sorte qu'une traction de ce câble 224, d'une force supérieure à celle produite par le ressort 223, fasse pivoter l'organe de blocage 220 dans le deuxième sens de rotation autour de l'élément d'articulation 221.

La poignée d'actionnement 225 est reliée à la deuxième extrémité du câble 224 et montée au niveau de la deuxième extrémité circonférentielle du cadre avant 52 du capot 31. Dans le mode de réalisation de la figure 25, les moyens de chargement comprennent aussi un verrou 706 formant un deuxième organe de tension.

Le verrou 706 comprend une première partie solidaire de la deuxième extrémité du cadre avant 52 du capot 31 et une deuxième partie solidaire du cadre arrière 53 des grilles 40. De manière analogue au verrou 702 décrit ci-dessus en référence aux figures 14 et 15, la première partie du verrou 706 comprend un premier élément d'attache formant un crochet destiné à coopérer avec un deuxième élément d'attache tel qu'un cylindre formant la deuxième partie de ce verrou 706.

A partir de la configuration de la figure 27 dans laquelle le capot 31 est en position de fermeture, le verrouillage du verrou 706 se traduit par l'application par les organes de tension 705 et 706 d'une contrainte circonférentielle sur le cadre avant 52 du capot 31, laquelle génère ladite contrainte de plaquage de la languette 57 dans la rainure 58.

Bien entendu, la description qui précède n'est pas limitative et de nombreuses variantes peuvent être apportées à ces différents modes de réalisation sans sortir du cadre de l'invention qui est définit par les revendications.

Par exemple, les moyens de liaison 50 peuvent comprendre une ou plusieurs languettes formées par les grilles 40 et une ou plusieurs rainures correspondantes formées par le cadre avant 52 de chacun des capots 31 (non représenté).

De plus, la description qui précède s'applique par analogie à un inverseur à grilles mobiles présentant une architecture en « C », bien connue dans le domaine aéronautique, dans laquelle les capots externes de la section arrière 17 s'ouvrent en position de maintenance indépendamment des parties de cette section formant le conduit secondaire 21N (non représenté).

## Revendications

1. Inverseur de poussée pour ensemble propulsif (1) d'aéronef, comprenant une partie fixe (41), deux capots (31) et des grilles de déviation (40), chacun des capots (31) étant relié à la partie fixe (41) selon une liaison pivot de manière à pouvoir être déplacé entre une position de fermeture et une position d'ouverture destinée à la maintenance de l'ensemble propulsif (1), l'inverseur comprenant des moyens de liaison (50) comprenant une ou plusieurs languettes (57) formées par les capots (31) ou respectivement par les grilles (40) et au moins une rainure (58) formée par les grilles (40) ou respectivement par les capots (31), les moyens de liaison (50) étant configurés de sorte que la ou les languettes (57) s'emmanchent dans l'au moins une rainure (58) lorsque les capots (31) sont déplacés de la position d'ouverture jusqu'à la position de fermeture de sorte que, en position de fermeture, les capots (31) et les grilles (40) forment un attelage mobile par rapport à la partie fixe (41) en translation le long d'un axe longitudinal (A1) entre une position avancée permettant à l'ensemble propulsif (1) de générer une poussée et une position reculée permettant à l'ensemble propulsif (1) de générer une contre-poussée, **caractérisé en ce qu'**il comprend des organes de tension (701-706) reliés aux grilles (40) et étant configurés de manière à exercer une contrainte de plaquage de la ou des languettes (57) dans l'au moins une rainure (58).

2. Inverseur selon la revendication 1, dans lequel les organes de tension (701, 706) sont configurés pour coopérer avec les capots (31) et/ou avec une ou plusieurs pièces de transmission d'effort (60).

3. Inverseur selon la revendication 1 ou 2, dans lequel les capots (31) comprennent un cadre (52) formant la ou les languettes (57), ou respectivement l'au moins une rainure (58), les organes de tension (701-706) étant configurés pour coopérer avec le cadre (52) des capots (31) ou avec une ou plusieurs pièces de transmission d'effort (60) portées par le cadre (52) des capots (31).

4. Inverseur selon l'une quelconque des revendications 1 à 3, dans lequel les organes de tension (701-706) comprennent au moins un verrou (702, 703, 706) et/ou au moins un compas (704; 705) comprenant au moins deux bielles (92, 93 ; 201, 202) articulées l'une à l'autre, l'une des bielles (93 ; 202) étant reliée aux grilles (40), l'autre bielle (92 ; 201) étant reliée à l'un des capots (31).

5. Inverseur selon l'une quelconque des revendications 1 à 4, incluant les caractéristiques de la revendication 2, comprenant une ou plusieurs sangles (60) formant ladite ou lesdites pièces de transmission d'effort, chacune des sangles (60) s'étendant radialement à l'extérieur des moyens de liaison (50) et circonférentiellement autour de l'axe longitudinal (A1), chacune des sangles (60) comprenant deux extrémités circonférentielles qui sont chacune configurées pour être reliées aux grilles (40) par l'un respectif des organes de tension (701-704) de sorte que les organes de tension (701-704) puissent exercer une contrainte circonférentielle sur les sangles (60).

6. Inverseur selon les revendications 4 et 5, dans lequel au moins l'une des extrémités circonférentielles d'au moins une desdites sangles (60) est reliée audit verrou (702, 703, 706).

7. Inverseur selon la revendication 5 ou 6, incluant les caractéristiques de la revendication 4, dans lequel au moins l'une des extrémités circonférentielles d'au moins une desdites sangles (60) est reliée audit compas (704) de manière à préserver la liaison entre cette sangle (60) et les grilles (40) lorsque les capots (31) sont déplacés entre les positions d'ouverture et de fermeture.

8. Inverseur selon l'une quelconque des revendications 5 à 7, dans lequel les sangles comprennent des sangles primaires (60A) et des sangles secondaires (60B) configurées de sorte que la contrainte de plaquage soit exercée par les sangles primaires (60A) lorsque celles-ci sont opérationnelles et par les sangles secondaires (60B) en cas de rupture ou défaillance des sangles primaires.

9. Inverseur selon l'une quelconque des revendications 1 à 8, incluant les caractéristiques de la revendication 4, dans lequel le compas (705) est configuré pour prendre une première configuration lorsque les capots (31) sont en position de fermeture et une deuxième configuration lorsque les capots (31) sont en position d'ouverture, l'inverseur comprenant un organe de blocage (220) permettant de bloquer le compas (705) dans la première configuration et un mécanisme de commande (224, 225) permettant de débloquer le compas (705) pour pouvoir le placer dans la deuxième configuration.

10. Procédé de plaquage de la ou des languettes (57) dans l'au moins une rainure (58) d'un inverseur selon l'une quelconque des revendications 1 à 9.

## Patentansprüche

1. Schubumkehrvorrichtung für eine Triebwerksanlage (1) eines Luftfahrzeugs, umfassend einen festen Abschnitt (41), zwei Verkleidungen (31) und Umlenkgitter (40), wobei jede der Verkleidungen (31) über ein Schwenkgelenk mit dem festen Abschnitt (41) verbunden ist, sodass sie zwischen einer Schließstellung und einer für die Wartung der Triebwerksanlage (1) vorgesehenen Offenstellung bewegbar ist, wobei die Schubumkehrvorrichtung Verbindungsmittel (50) umfasst, die eine oder mehrere Laschen (57), gebildet durch die Verkleidungen (31) oder jeweils durch die Gitter (40), und mindestens eine Nut (58), gebildet durch die Gitter (40) oder jeweils durch die Verkleidungen (31), umfassen, wobei die Verbindungsmittel (50) so konfiguriert sind, dass die eine oder mehrere Laschen (57) in die mindestens eine Nut (58) eingreifen, wenn die Verkleidungen (31) von der Offenstellung in die Schließstellung bewegt werden, sodass in der Schließstellung die Verkleidungen (31) und die Gitter (40) eine relativ zum festen Abschnitt (41) entlang einer Längsachse (A1) zwischen einer Vorwärtsstellung, in der die Triebwerksanlage (1) Schub erzeugt, und einer Rückwärtsstellung, in der die Triebwerksanlage (1) Gegenschub erzeugt, verschiebbare Einheit bilden, **dadurch gekennzeichnet, dass** sie Spannorgane (701-706) umfasst, die mit den Gittern (40) verbunden sind und so konfiguriert sind, dass sie eine Anpresskraft der einen oder mehrerer Laschen (57) in die mindestens eine Nut (58) ausüben.

2. Schubumkehrvorrichtung nach Anspruch 1, wobei die Spannorgane (701, 706) so konfiguriert sind, dass sie mit den Verkleidungen (31) und/oder mit einem oder mehreren Kraftübertragungselementen (60) zusammenwirken.

3. Schubumkehrvorrichtung nach Anspruch 1 oder 2, wobei die Verkleidungen (31) einen Rahmen (52) umfassen, der die eine oder mehrere Laschen (57) oder jeweils die mindestens eine Nut (58) bildet, wobei die Spannorgane (701-706) so konfiguriert sind, dass sie mit dem Rahmen (52) der Verkleidungen (31) oder mit einem oder mehreren von dem Rahmen (52) der Verkleidungen (31) getragenen Kraftübertragungselementen (60) zusammenwirken.

4. Schubumkehrvorrichtung nach einem der Ansprüche 1 bis 3, wobei die Spannorgane (701-706) mindestens einen Verschluss (702, 703, 706) und/oder mindestens eine Koppelstange (704; 705) umfassen, die mindestens zwei gelenkig miteinander verbundene Stangen (92, 93; 201, 202) aufweist, wobei eine der Stangen (93; 202) mit den Gittern (40) und die andere Stange (92; 201) mit einer der Verkleidungen (31) verbunden ist.

5. Schubumkehrvorrichtung nach einem der Ansprüche 1 bis 4, mit den Merkmalen des Anspruchs 2, umfassend ein oder mehrere Bänder (60), die das/die Kraftübertragungselement(e) bilden, wobei jedes Band (60) radial außerhalb der Verbindungsmittel (50) und umfangsseitig um die Längsachse (A1) verläuft, wobei jedes Band (60) zwei umfangsseitige Enden aufweist, die jeweils so konfiguriert sind, dass sie über jeweils eines der Spannorgane (701-704) mit den Gittern (40) verbunden werden können, sodass die Spannorgane (701-704) eine Umfangskraft auf die Bänder (60) ausüben können.

6. Schubumkehrvorrichtung nach den Ansprüchen 4 und 5, wobei mindestens eines der umfangsseitigen Enden von mindestens einem der genannten Bänder (60) mit dem genannten Verschluss (702, 703, 706) verbunden ist.

7. Schubumkehrvorrichtung nach Anspruch 5 oder 6, mit den Merkmalen des Anspruchs 4, wobei mindestens eines der umfangsseitigen Enden von mindestens einem der genannten Bänder (60) mit der genannten Koppelstange (704) verbunden ist, um die Verbindung zwischen diesem Band (60) und den Gittern (40) aufrechtzuerhalten, wenn die Verkleidungen (31) zwischen der Offen- und Schließstellung bewegt werden.

8. Schubumkehrvorrichtung nach einem der Ansprüche 5 bis 7, wobei die Bänder Primärbänder (60A) und Sekundärbänder (60B) umfassen, die so konfiguriert sind, dass die Anpresskraft von den Primärbändern (60A) ausgeübt wird, wenn diese funktionsfähig sind, und von den Sekundärbändern (60B) im Falle eines Bruchs oder Ausfalls der Primärbänder.

9. Schubumkehrvorrichtung nach einem der Ansprüche 1 bis 8, mit den Merkmalen des Anspruchs 4, wobei die Koppelstange (705) so konfiguriert ist, dass sie eine erste Konfiguration einnimmt, wenn die Verkleidungen (31) in der Schließstellung sind, und eine zweite Konfiguration, wenn die Verkleidungen (31) in der Offenstellung sind, wobei die Schubumkehrvorrichtung ein Sperrorgan (220) umfasst, das die Koppelstange (705) in der ersten Konfiguration sperrt, und einen Betätigungsmechanismus (224, 225), der das Entsperren der Koppelstange (705) ermöglicht, um sie in die zweite Konfiguration zu bringen.

10. Verfahren zum Anpressen der einen oder mehrerer Laschen (57) in die mindestens eine Nut (58) einer Schubumkehrvorrichtung nach einem der Ansprüche 1 bis 9.

## Claims

1. Thrust reverser for an aircraft propulsion assembly (1), comprising a fixed portion (41), two cowls (31), and deflection grids (40), each of the cowls (31) being connected to the fixed portion (41) by a pivot joint so as to be movable between a closed position and an open position intended for maintenance of the propulsion assembly (1), the reverser comprising connection means (50) including one or more tabs (57) formed by the cowls (31) or respectively by the grids (40) and at least one groove (58) formed by the grids (40) or respectively by the cowls (31), the connection means (50) being configured such that the one or more tabs (57) fit into the at least one groove (58) when the cowls (31) are moved from the open position to the closed position so that, in the closed position, the cowls (31) and the grids (40) form an assembly movable relative to the fixed portion (41) in translation along a longitudinal axis (A1) between a forward position allowing the propulsion assembly (1) to generate thrust and a rearward position allowing the propulsion assembly (1) to generate reverse thrust, **characterized in that** it comprises tension members (701-706) connected to the grids (40) and configured to exert a clamping force of the one or more tabs (57) in the at least one groove (58).

2. Thrust reverser according to claim 1, wherein the tension members (701, 706) are configured to cooperate with the cowls (31) and/or with one or more force transmission parts (60).

3. Thrust reverser according to claim 1 or 2, wherein the cowls (31) comprise a frame (52) forming the one or more tabs (57), or respectively the at least one groove (58), the tension members (701-706) being configured to cooperate with the frame (52) of the cowls (31) or with one or more force transmission parts (60) carried by the frame (52) of the cowls (31).

4. Thrust reverser according to any one of claims 1 to 3, wherein the tension members (701-706) comprise at least one latch (702, 703, 706) and/or at least one link rod assembly (704; 705) comprising at least two rods (92, 93; 201, 202) articulated to each other, one of the rods (93; 202) being connected to the grids (40), the other rod (92; 201) being connected to one of the cowls (31).

5. Thrust reverser according to any one of claims 1 to 4, including the features of claim 2, comprising one or more straps (60) forming said force transmission part(s), each strap (60) extending radially outside the connection means (50) and circumferentially around the longitudinal axis (A1), each strap (60) comprising two circumferential ends each configured to be connected to the grids (40) by a respective one of the tension members (701-704) so that the tension members (701-704) can exert a circumferential force on the straps (60).

6. Thrust reverser according to claims 4 and 5, wherein at least one of the circumferential ends of at least one of said straps (60) is connected to said latch (702, 703, 706).

7. Thrust reverser according to claim 5 or 6, including the features of claim 4, wherein at least one of the circumferential ends of at least one of said straps (60) is connected to said link rod assembly (704) so as to maintain the connection between this strap (60) and the grids (40) when the cowls (31) are moved between the open and closed positions.

8. Thrust reverser according to any one of claims 5 to 7, wherein the straps comprise primary straps (60A) and secondary straps (60B) configured such that the clamping force is exerted by the primary straps (60A) when these are operational and by the secondary straps (60B) in the event of breakage or failure of the primary straps.

9. Thrust reverser according to any one of claims 1 to 8, including the features of claim 4, wherein the link rod assembly (705) is configured to take a first configuration when the cowls (31) are in the closed position and a second configuration when the cowls (31) are in the open position, the reverser comprising a locking member (220) for locking the link rod assembly (705) in the first configuration and a control mechanism (224, 225) for unlocking the link rod assembly (705) to allow it to be placed in the second configuration.

10. Method for clamping the one or more tabs (57) in the at least one groove (58) of a thrust reverser according to any one of claims 1 to 9.
